# EUROPÄISCHE PATENTSCHRIFT

(11) **EP 4 311 961 B1**
(45) Veröffentlichungstag und Bekanntmachung des Hinweises auf die Patenterteilung: **21.10.2026**
(21) Anmeldenummer: 23187730.9
(22) Anmeldetag: 26.07.2023
(51) Int. Cl.: F16K 5/06, F16K 27/06

(54) **KUGELVENTIL**
BALL VALVE
ROBINET À TOURNANT SPHÉRIQUE

(30) Priorität: 27.07.2022 DE 102022118859
(43) Veröffentlichungstag der Anmeldung: 31.01.2024
(73) Patentinhaber: Otto Egelhof GmbH & Co. KG, 70736 Fellbach (DE)
(72) Erfinder: Dr. Willers, Eike, 70469 Stuttgart (DE); Bohnenstengel, Peter, 73730 Esslingen (DE)
(74) Vertreter: Mammel und Maser Patentanwälte PartG mbB

(56) Entgegenhaltungen:
- WO-A1-2021/220165
- CN-A- 112 049 957
- DE-U1- 202016 106 129
- US-A- 3 603 560

## Beschreibung

Die Erfindung betrifft ein Kugelventil, insbesondere für den Einsatz in einem Kältemittelkreislauf einer Kälteanlage.

Aus der DE 10 2012 111 467 A1 ist ein Kugelventil bekannt. Dieses Kugelventil umfasst ein Gehäuse mit einer Einlassöffnung und einer Auslassöffnung. Zwischen der Einlassöffnung und der Auslassöffnung ist ein Regulierraum vorgesehen. Eine Kugel mit einer Einströmöffnung und einer Ausströmöffnung, die durch einen Durchgangskanal miteinander verbunden sind, wird durch die Einlassöffnung in den Regulierraum des Gehäuses eingesetzt. Darauffolgend wird die Einlassöffnung mit einem Verschluss geschlossen, wobei eine Dichtung des Verschlusses an der Umfangsfläche der Kugel angreift. Zur Ansteuerung der Kugel wird über eine Anschlussöffnung im Gehäuse eine Welle eingesetzt, die in einer Wellenlagerung vorgesehen ist. Mittels eines Motors, der auf das Wellenende der Welle aufgesetzt wird, erfolgt die Ansteuerung der Kugel bezüglich deren Schaltpositionen. Diese Anordnung weist den Nachteil auf, dass die Montage zeitaufwändig ist.

Aus der WO 2021/220 165 A1 ist ein Kugelventil bekannt. Dieses Kugelventil umfasst ein Ventil mit einer kugelförmigen Steuerfläche, welche durch eine Anschlussöffnung in das Gehäuse einsetzbar ist. An dem Ventil mit der kugelförmigen Steuerfläche ist eine Welle einsetzbar, um eine Drehbewegung anzusteuern. Diese Welle und die kugelförmige Steuerfläche können einteilig ausgebildet sein. Alternativ ist vorgeschlagen, dass die kugelförmige Steuerfläche und ein Drehlager einteilig ausgebildet sind, wohingegen die Welle getrennt zur Steuerfläche ausgebildet ist.

Aus der DE 20 2016 106 129 A1 ist ein Mehrwege-Kugelhahn zum Regulieren von zwei Strömungskreisen bekannt. Nach dem Positionieren eines Kugelhahnkörpers in dem Gehäuse werden seitlich Anschlüsse montiert, sodass das Gehäuse einen Zulauf und einen Ablauf umfasst. Zusätzlich wird an einer Unterseite ein Verschlussdeckel an das Gehäuse montiert. Dieser Verschlussdeckel umfasst ein Drehlager, der zu dem Kugelhahnkörper positionierbar ist.

Aus der CN 112049957 A ist des Weiteren ein Kugelventil bekannt. Dieses Kugelventil umfasst ein Ventil mit einer kugelförmigen Steuerfläche auf welche eine Welle aufsetzbar ist um eine Drehbewegung der kugelförmigen Steuerfläche anzusteuern.

Der Erfindung liegt die Aufgabe zugrunde, ein Kugelventil vorzuschlagen, welches in einfacher und schneller Weise zu montieren ist.

Diese Aufgabe wird durch ein Kugelventil gelöst, bei welchem die zumindest eine kugelförmige Steuerfläche durch die Anschlussöffnung des Gehäuses in den Regulierraum einsetzbar und zwischen der Einlassöffnung und der Auslassöffnung positionierbar ist, und bei welchem die kugelförmige Steuerfläche einen unteren Anschlussabschnitt aufweist, an dem ein Drehlager vorgesehen ist, welches beim Positionieren des Ventils in dem Regulierrraum in einer Lagerstelle des Gehäuses positionierbar ist. Die kugelförmige Steuerfläche, die Welle und das Drehlager sind einstückig ausgebildet. Dies weist den Vorteil auf, dass eine vormontierte Einheit, nämlich das Anschlussgehäuse, die Welle und die kugelförmige Steuerfläche über die Anschlussöffnung in das Gehäuse einsetzbar sind. Des Weiteren ist der Vorteil gegeben, dass unmittelbar nach dem Einsetzen der vormontierten Einheit in das Gehäuse eine drehgesicherte Anordnung des Ventils zum Gehäuse durch das in die Lagerstelle eingesetzte Drehlager ermöglicht ist. Dadurch kann eine erhebliche Reduzierung der Montagezeit ermöglicht sein.

Bevorzugt ist vorgesehen, dass das Gehäuse einteilig ausgebildet ist und in dem Gehäuse die Einlassöffnung und die zumindest eine Auslassöffnung sowie der dazwischen angeordnete Regulierraum als auch die Auslassöffnung vorgesehen ist, wobei die Auslassöffnung sich zwischen dem Regulierraum und einer Außenseite des Gehäuses erstreckt. Diese Ausführungsform ermöglicht, dass keine Undichtigkeiten gegeben sind, wie dies bei einem mehrteiligen Gehäuse der Fall ist.

Vorteilhafterweise ist vorgesehen, dass nur einseitig in die Einlassöffnung des Gehäuses ein Verschluss einsetzbar ist, der eine an der kugelförmigen Steuerfläche angreifende Dichtung aufweist. Sofern das Ventil mit der kugelförmigen Steuerfläche in nur einer Richtung durchströmt wird, nämlich dass das Medium der Einlassöffnung zugeführt wird, kann die Auslassöffnung ohne einen solchen Verschluss ausgebildet sein. Alternativ kann auch vorgesehen sein, dass sowohl die Einlassöffnung als auch die Auslassöffnung jeweils einen Verschluss mit einer Dichtung umfasst, welche an der kugelförmigen Steuerfläche angreift.

Vorteilhafterweise ist vorgesehen, dass das Drehlager als ein Lagerzapfen ausgebildet ist, der in eine Lagerstelle im Gehäuse eingreift oder in eine Lagerbuchse, welche in der Lagerstelle des Gehäuses vorgesehen ist. Die Lagerbuchse ist bevorzugt aus Kunststoff ausgebildet.

Die Welle des Kugelventils ist bevorzugt in dem Anschlussgehäuse mit zumindest einer Gleithülse gelagert. Diese Gleithülse kann an den oberen Anschlussabschnitt der kugelförmigen Steuerfläche angrenzend vorgesehen sein. Dadurch wird zum einen eine Lagerung nahe der Steuerfläche ermöglicht. Zum anderen kann an dem gegenüberliegenden Ende der Welle, an welcher ein Antrieb angreift, eine weitere Lagerung gegeben sein. Vorzugsweise können auch im Bereich einer Wellendurchführung durch das Anschlussgehäuse hindurch Dichtungselemente vorgesehen sein.

Vorteilhafterweise weist die kugelförmige Steuerfläche einen oberen Anschlussabschnitt auf, der dem unteren Anschlussabschnitt gegenüber liegt, wobei zwischen den Anschlussabschnitten zumindest eine Einströmöffnung und/oder zumindest eine Ausströmöffnung des Durchgangs in der kugelförmigen Steuerfläche vorgesehen ist. Bevorzugt ist an dem unteren Anschlussabschnitt ein Drehlager und an dem oberen Anschlussabschnitt die Welle vorgesehen. Dadurch kann die Lagerung der kugelförmigen Steuerfläche in dem Regulierraum des Gehäuses verbessert sein. Zudem ist durch die Anwendung des Drehlagers an der kugelförmigen Steuerfläche wiederum eine vereinfachte Montage ermöglicht.

Gemäß einer bevorzugten Ausführungsform ist vorgesehen, dass zwischen der Welle und dem oberen Anschlussabschnitt der kugelförmigen Steuerfläche eine drehgesicherte Steckverbindung vorgesehen ist. Somit kann in einfacher Weise eine vormontierte Baugruppe geschaffen werden, indem die kugelförmige Steuerfläche auf die Welle aufgesteckt wird, um darauffolgend das Anschlussgehäuse in die Anschlussöffnung zusammen mit der kugelförmigen Steuerfläche einzusetzen.

Alternativ kann vorgesehen sein, dass die Welle einstückig mit dem oberen Anschlussabschnitt ausgebildet ist. Beispielsweise kann anstelle der Steckverbindung eine Pressverbindung oder Schweißverbindung oder Schraubverbindung vorgesehen sein, um die Welle mit der kugelförmigen Steuerfläche zu verbinden.

Bevorzugt ist vorgesehen, dass die zumindest eine kugelförmige Steuerfläche, die Welle, das Drehlager und die Gleithülse einstückig ausgebildet sind. Diese Ausgestaltung weist den Vorteil auf, dass eine Reduzierung in der Anzahl der Bauteile ermöglicht ist. Zudem wird ein spielfreier Aufbau zwischen der Welle und der Kugel geschaffen, so dass eine hysteresefreie Ansteuerung des Ventils ermöglicht wird.

Die einstückige Ausgestaltung der zumindest einen kugelförmigen Steuerfläche und der Welle und vorzugsweise des Drehlagers und/oder der Gleithülse kann bevorzugt durch ein Spritzgussteil, insbesondere Kunststoff-Spritzgussteil, oder ein Gussteil erfolgen. Alternativ kann auch ein 3D-Druckbauteil oder ein zweikomponentiges Bauteil vorgesehen sein. Auch ist ermöglicht, ein Verbundbauteil auszugestalten, bei dem beispielsweise ein Durchgang oder ein Kanal durch eine Einlegehülse gebildet ist und die weiteren Komponenten durch eine Umspritzung ausgebildet werden. Alternativ kann auch das Drehlager aus Metall ausgebildet sein und an der kugelförmigen Steuerfläche durch Anspritzen von Kunststoff verbunden werden.

Gemäß einer weiteren bevorzugten Ausgestaltung des einstückig ausgebildeten Ventils, welches die Welle, die zumindest eine kugelförmige Steuerfläche und vorzugsweise das Drehlager und/oder vorzugsweise die Gleithülse umfasst, ist vorgesehen, dass zumindest ein Wellenabschnitt der Welle und die kugelförmige Steuerfläche gratfrei ausgebildet sind. Dadurch kann eine verbesserte Dichtfunktion und eine Verringerung des Dichtungsverschleißes gegeben sein. Insbesondere sind Kanten und/oder Übergänge an der kugelförmigen Steuerfläche und/oder der Welle gerundet, die mit der zumindest einen Dichtung in Berührung kommen.

Gemäß einer weiteren Ausgestaltung der Erfindung ist vorgesehen, dass die kugelförmige Steuerfläche an einer Kugel, bei welchem der Durchgang zwischen der Einströmöffnung und der Ausströmöffnung als ein Durchgangskanal ausgebildet ist. Vorteilhafterweise sind die Einströmöffnung und die Ausströmöffnung einander gegenüberliegend, insbesondere in einer gemeinsamen Längsachse, angeordnet. Alternativ kann auch vorgesehen sein, dass die Ausströmöffnung in einem Winkel von kleiner 180° zur Einströmöffnung angeordnet ist.

Insbesondere kann vorgesehen sein, dass die Einströmöffnung und die Ausströmöffnung in einer gemeinsamen Ebene liegen, jedoch deren Längsachsen in einem Winkel von kleiner 180° ausgebildet sind. Alternativ kann auch vorgesehen sein, dass die Ausströmöffnung abweichend von der Ebene oder Längsachse der Einströmöffnung liegt.

Gemäß einer weiteren bevorzugten Ausgestaltung der Erfindung ist vorgesehen, dass zumindest zwei kugelförmige Steuerflächen zur Längsachse der Welle ausgerichtet sind und gemeinsam durch die Welle ansteuerbar sind. Diese zwei kugelförmigen Steuerflächen können bevorzugt eine voneinander abweichende Ausrichtung in Bezug auf die jeweilige Einströmöffnung und/oder der Ausströmöffnung aufweisen. Dadurch kann ein Mehrwegventil in einfacher Weise ausgebildet werden.

Eine bevorzugte Ausführungsform des Kugelventils, welches beispielsweise als ein Gussteil oder Formteil ausgebildet ist, sieht vor, dass an der Kugel und/oder an der Welle zumindest eine Aussparung zur Reduzierung einer Materialanhäufung vorgesehen ist. Eine solche Vertiefung oder Aussparung weist den Vorteil auf, dass aufgrund von großvolumigen Materialanhäufungen Einfallstellen vermieden werden, wodurch eine erhöhte Maßhaltigkeit des Kugelventils gegeben ist. Beispielsweise kann die Welle als eine Hohlwelle ausgebildet sein. An der Kugel können ein oder mehrere Aussparungen vorgesehen sein, die sich zwischen der Steuerfläche und dem zumindest einen Durchgang erstrecken.

Des Weiteren kann bevorzugt vorgesehen sein, insbesondere bei Kugelventilen mit einem geringen oder kleinen Bauvolumen, dass die Kugel und die Welle aus einem Vollmaterial ausgebildet sind. Bei solchen kleinbauenden Kugelventilen kann kein Raum mehr für eine Aussparung oder Vertiefung verbleiben.

Gemäß einer weiteren bevorzugten Ausgestaltung der Erfindung ist vorgesehen, dass die kugelförmige Steuerfläche an einem Schalenelement oder als ein Schalensegment ausgebildet ist, in welchem die Einströmöffnung angeordnet ist. Der Durchgang wird durch die Wandstärke des Schalensegments gebildet und die Austrittsöffnung liegt auf der gegenüberliegenden Seite zur Einströmöffnung des Schalensegments. Solche Schalensegmente stellen eine weitere vereinfachte Ausgestaltung dar. Dieses Schalensegment, die Welle und/oder das Drehlager können ebenfalls bevorzugt als Kunststoff-Spritzgussteil, Gussteil oder 3D-Druckbauteil ausgebildet sein.

Das Kugelventil kann bevorzugt als ein Schaltventil, ein Dosierventil, ein Mehrwegventil oder ein Expansionsventil ausgebildet sein.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine schematische Schnittansicht eines nicht erfindungsgemäßen Kugelventils,
- Figur 2: eine schematische Schnittansicht einer alternativen Ausführungsform des Kugelventils zu Figur 1,
- Figur 3: eine schematische Schnittansicht einer alternativen Ausführungsform des Kugelventils zu Figur 1,
- Figur 4: eine schematische Schnittansicht einer erfindungsgemäßen Ausführung eines Kugelventils,
- Figur 5: eine schematische Schnittansicht einer alternativen Ausführungsform des Kugelventils zu Figur 4,
- Figur 6: eine perspektivische Ansicht des Ventils gemäß Figur 4,
- Figur 7: eine perspektivische Ansicht einer alternativen Ausführungsform des Ventils zu Figur 6,
- Figur 8: eine schematische Ansicht von Durchgangskanälen des Ventils gemäß Figur 7,
- Figur 9: eine perspektivische Ansicht einer alternativen Ausführungsform des Ventils zu Figur 6,
- Figur 10: eine weitere schematische Ansicht des Ventils gemäß Figur 9,
- Figur 11: eine perspektivische Ansicht von unten auf eine alternative Ausführungsform des Ventils zu Figur 6,
- Figur 12: eine perspektivische Ansicht von oben auf das Ventil gemäß Figur 11 und
- Figur 13: eine schematische Schnittansicht des Ventils gemäß Figur 11.

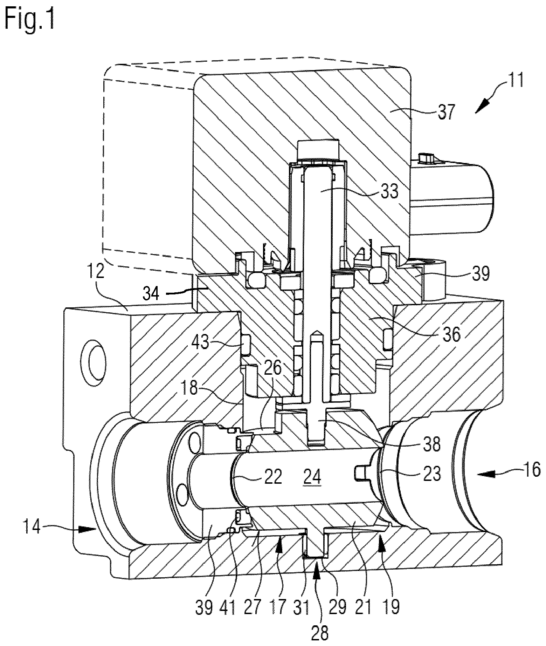

In Figur 1 ist eine schematische Schnittansicht eines Kugelventils 11 dargestellt. Ein solches Kugelventil 11 kann in einem Kältemittelkreislauf einer Kälteanlage, insbesondere im Fahrzeug, vorgesehen sein. Das Kugelventil 11 umfasst ein Gehäuse 12 mit einer Einlassöffnung 14 und einer Auslassöffnung 16. Nur beispielhaft sind die Einlassöffnung 14 und die Auslassöffnung 16 einander gegenüberliegend vorgesehen. Die Auslassöffnung 16 kann auch in abweichenden Positionen zur Einlassöffnung 14 angeordnet sein.

Zwischen der Einlassöffnung 14 und der Auslassöffnung 16 ist ein Regulierraum 17 vorgesehen. Des Weiteren umfasst das Gehäuse 12 eine Anschlussöffnung 18, welche eine Außenseite des Gehäuses 12 mit dem Regulierraum 17 verbindet. In dem Regulierraum 17 ist ein Ventil 19 angeordnet. Dieses Ventil 19 umfasst eine kugelförmige Steuerfläche 20. Im Ausführungsbeispiel ist die kugelförmige Steuerfläche an einer Kugel 21 ausgebildet. Diese Kugel 21 umfasst eine Einströmöffnung 22 sowie eine Ausströmöffnung 23. Die Einströmöffnung 22 und die Ausströmöffnung 23 sind durch einen Durchgang 24 miteinander verbunden. Dieser Durchgang 24 ist beispielsweise als ein Kanal ausgebildet.

Die Kugel 21 weist einen oberen Anschlussabschnitt 26 sowie einen unteren Anschlussabschnitt 27 auf. An dem unteren Anschlussabschnitt 27 ist ein Drehlager 28 vorgesehen. Dieses Drehlager 28 kann als ein Zapfen ausgebildet sein. Bevorzugt ist dieses Drehlager 28 in einer Lagerstelle 29 im Gehäuse 12 drehbar gelagert. Vorteilhafterweise kann eine Lagerbuchse 31 in der Lagerstelle 29 vorgesehen sein, um das Drehlager 28 aufzunehmen. Dadurch kann eine verbesserte Führung ermöglicht sein.

An der oberen Anschlussstelle 26 der Kugel 21 greift eine Welle 33 an. Diese Welle 33 wird in einem Anschlussgehäuse 34 geführt. Zwischen der Welle 33 und dem Anschlussgehäuse 34 ist bevorzugt eine Wellendurchführung 36 vorgesehen, welche eine reibungsfreie und/oder abdichtende Lagerung der Welle 33 zum Anschlussgehäuse 34 ermöglicht.

Ein oberes Ende der Welle 33 wird gegenüber dem Anschlussgehäuse 34 herausgeführt. Dieses obere Ende der Welle 33 ist mit einem Antrieb 37 drehverbunden. Durch diesen Antrieb 37 werden Schaltpositionen des Ventils 19 angesteuert.

Das Ventil 19 und das Anschlussgehäuse 34 werden gemeinsam über die Anschlussöffnung 18 im Gehäuse 12 eingesetzt, um das Ventil 19 im Regulierraum 17 zu positionieren. Darauffolgend wird ein Verschluss 39 in die Einlassöffnung 14 eingesetzt. Dieser Verschluss 39 weist eine zur kugelförmigen Steuerfläche 20 weisende Dichtung 41 auf. In einer Schaltposition, bei welcher die Einströmöffnung 22 außerhalb der Einlassöffnung 14 liegt, ist die Einlassöffnung 14 geschlossen, so dass kein Medium zur Auslassöffnung 16 gelangen kann. Die kugelförmige Steuerfläche 20 der Kugel 21 weist für die Dichtung 41 den Vorteil auf, dass unabhängig von der Schaltposition die Dichtung 41 an zumindest zwei Stellen immer an der kugelförmigen Steuerfläche 20 anliegen kann. Bevorzugt liegt die Dichtung umlaufend an der Kugel an.

Nach dem Einsetzen des Anschlussgehäuses 34 in die Anschlussöffnung 18 im Gehäuse 12 erfolgt bevorzugt eine lösbare Fixierung, insbesondere Verschraubung an dem Gehäuse 12. Gleichzeitig wird die Anschlussöffnung 18 durch zumindest eine Dichtung 43 dazwischen abgedichtet.

Bei dieser Anordnung gemäß Figur 1 kann vorgesehen sein, dass in der Ausströmöffnung 23 an der kugelförmigen Steuerfläche 20 kein weiteres Dichtelement mehr angreift.

Die Verbindung zwischen der Welle 33 und der kugelförmigen Steuerfläche 20 bzw. der Kugel 21 erfolgt verdrehgesichert. Vorzugsweise ist eine Steckverbindung 38 vorgesehen. Alternativ kann auch eine Pressverbindung, eine Klebeverbindung oder eine Schraubverbindung vorgesehen sein.

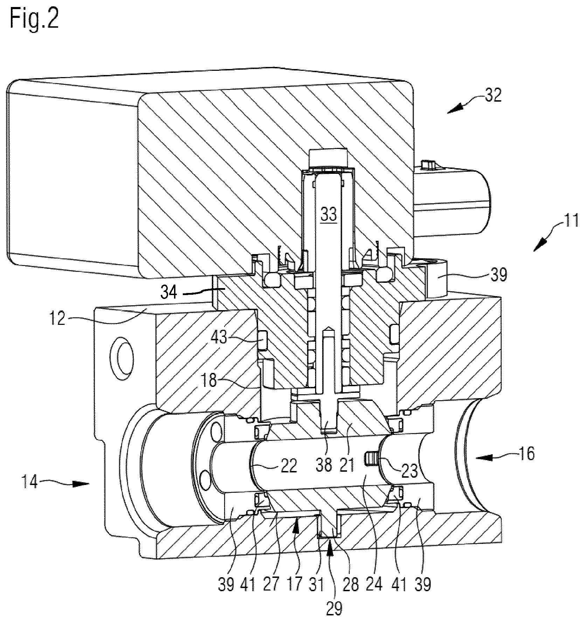

In Figur 2 ist eine schematische Schnittansicht einer alternativen Ausführungsform des Kugelventils 11 gemäß Figur 1 dargestellt. Bei dieser Ausführungsform ist in der Auslassöffnung 16 ebenfalls ein Verschluss 39 mit einer Dichtung 41 vorgesehen. Im Übrigen ist der Aufbau entsprechend dem Kugelventil gemäß Figur 1.

Diese Ausgestaltung des Kugelventils 11 weist den Vorteil auf, dass die Einlassöffnung 14 und die Auslassöffnung 16 bezüglich der Strömungsrichtung des zu regelnden Massenstroms auch vertauscht werden können.

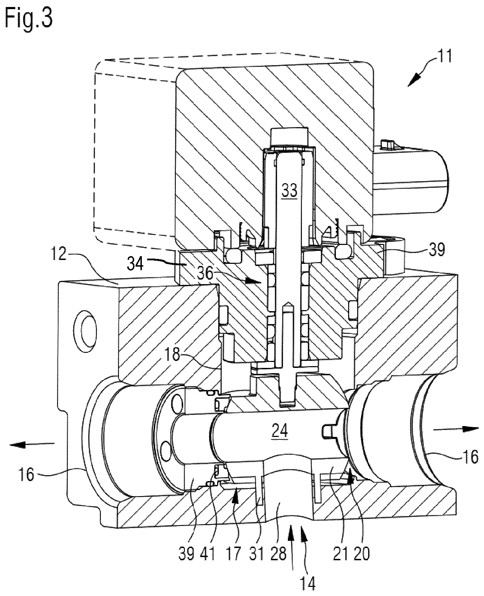

In Figur 3 ist eine alternative Ausführungsform des Kugelventils 11 zu Figur 1 dargestellt. Dieses Kugelventil 11 umfasst eine Einlassöffnung 14 und zwei Auslassöffnungen 16. Hierfür ist in der Kugel 21 ein T-förmiger Durchgang 24 ausgebildet. Beispielsweise ist eine zentrale Einströmöffnung 22 an der Kugel 21 vorgesehen, deren Längsachse in der Längsachse der Welle 33 liegt. Die beiden Auslassöffnungen 23 können, wie dargestellt, in der kugelförmigen Steuerfläche 20 einander gegenüberliegend, also um 180° versetzt sein. Alternativ kann vorgesehen sein, dass die beiden Ausströmöffnungen 23 in einem Winkel von kleiner 180° in derselben Ebene positioniert sind, so dass durch die Schaltposition des Ventils 19 zunächst eine Auslassöffnung 16 geöffnet wird und darauffolgend oder überschneidend die zweite Auslassöffnung 16 ebenfalls geöffnet wird. Die Ein- und Ausströmöffnungen 22, 23 im Ventil 19 können auch beliebig vertauscht sein.

Bei dieser Ausführungsform ist vorgesehen, dass das Drehlager 28 als Ringbund ausgebildet ist und beispielsweise innerhalb des Ringbundes die Einströmöffnung 22 vorgesehen ist.

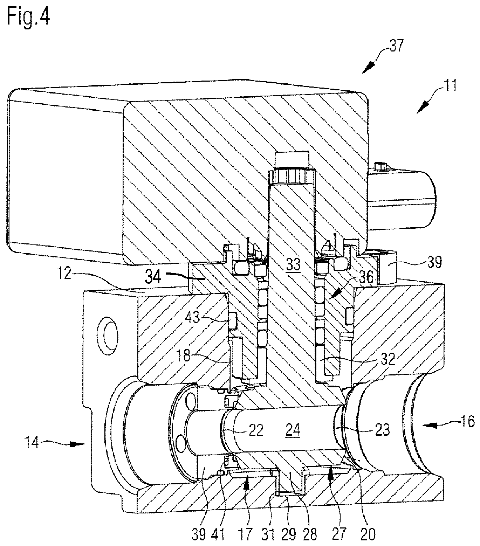

In Figur 4 ist eine erfindungsgemäße Ausgestaltung des Kugelventils 11 dargestellt. Bei dieser Ausgestaltung ist vorgesehen, dass das Ventil 19 einstückig ausgebildet ist. Die kugelförmige Steuerfläche 20 und die Welle 33 sowie vorzugsweise auch das Drehlager 28 sind aus einem einzigen Teil ausgebildet. Bevorzugt ist die kugelförmige Steuerfläche 20 an einer Kugel 21 ausgebildet. Vorteilhafterweise ist das Ventil 19 gemäß Figur 4 als ein Kunststoff-Spritzgussteil ausgebildet. Das Ventil 19 ist bevorzugt in dem Anschlussgehäuse 34 mit einer Gleithülse 32 gelagert und geführt. Durch die Anordnung einer Lagerbuchse 31, welche dem unteren Anschlussabschnitt 27 zugeordnet ist und der Gleithülse 32, welche dem oberen Anschlussabschnitt 26 zugeordnet ist, kann eine präzise Lagerung für das Ventil 19 ermöglicht sein. In dem Anschlussgehäuse 34 ist ergänzend zur Gleithülse 32 ebenfalls die Wellendurchführung 36 vorgesehen. Im Übrigen entspricht diese Ausführungsform des Kugelventils 11 im Aufbau dem gemäß Figur 1.

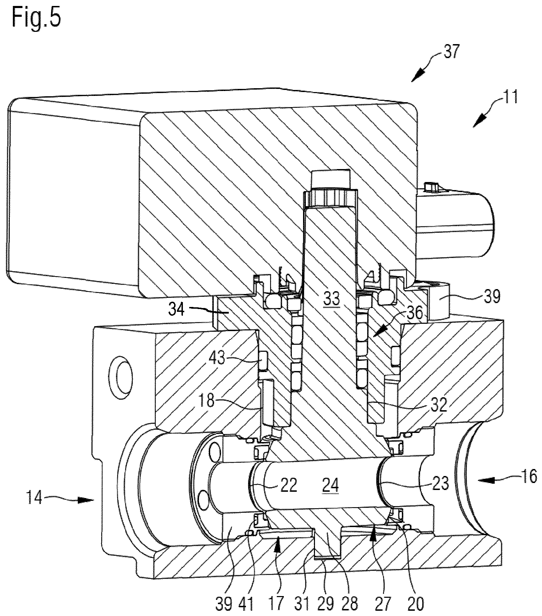

In Figur 5 ist eine alternative Ausführungsform des Ventils 19 dargestellt. Im Übrigen entspricht diese Ausführungsform der Ausführungsform gemäß den Figuren 1, 2 oder 4.

Bei dieser Ausführungsform ist die Gleithülse 32 einteilig an dem Ventil 19 ausgebildet oder angeformt. Somit kann die Gleithülse 32 wie das Drehlager 28 einstückig mit der Kugel 21 und der Welle 33 ausgebildet sein.

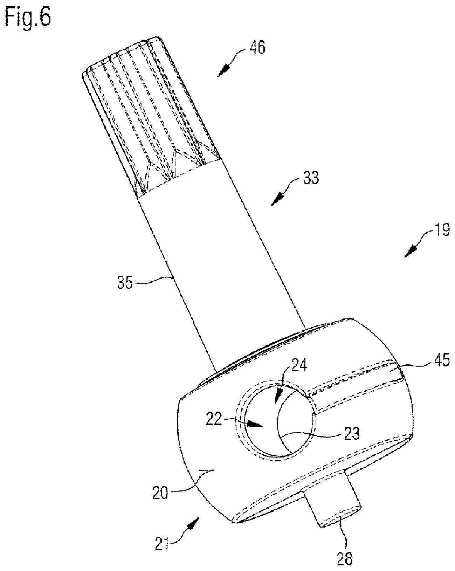

In Figur 6 ist eine perspektivische Ansicht des Ventils 19 gemäß Figur 4 dargestellt. Der Einströmöffnung 22 zugeordnet kann die kugelförmige Steuerfläche 20 in radialer Richtung ausgerichtet eine Anströmvertiefung 45 aufweisen. Diese geht bündig in die kugelförmige Steuerfläche 20 über. Dadurch kann beim Ansteuern des Ventils 19 ein kontinuierlicher Druckaufbau in dem Durchgang 24 erzeugt werden. Alternativ kann das Ventil 19 auch zur Expansion des Mediums angesteuert werden. Das Kugelventil 11 kann als Expansionsventil ausgebildet sein.

Das obere Ende der Welle 33 umfasst eine Verzahnung 46, durch welche eine verdrehsichere Anordnung mit dem Antrieb 37 ermöglicht ist. Vorteilhafterweise kann zwischen dem Antrieb 37 und der Verzahnung der Welle 33 noch eine Lagerhülse vorgesehen sein.

Bei dieser einteiligen Ausgestaltung des Ventils 19 ist zumindest ein Wellenabschnitt 35 der Welle 33 und/oder die kugelförmige Steuerfläche 20 gratfrei ausgebildet.

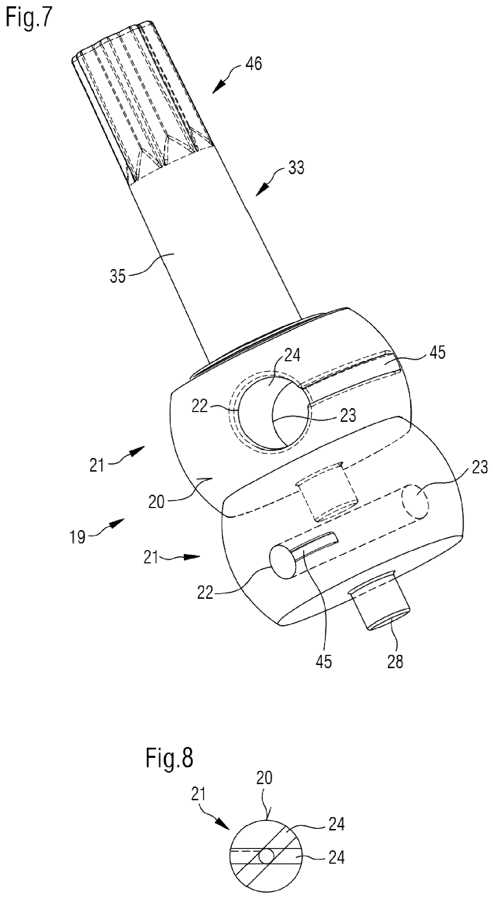

In Figur 7 ist eine perspektivische Ansicht einer alternativen Ausführungsform zu Figur 6 dargestellt. Bei dieser Ausführungsform des Ventils 19 sind beispielsweise zwei kugelförmige Steuerflächen 20 in der Längsachse der Welle 33 aneinandergereiht. Beispielsweise kann die untere Kugel 21 auf die obere Kugel 21 aufgesteckt oder aufgepresst oder auch angeformt sein. Auch diese Ausführungsform gemäß Figur 6 kann aus einem einzigen Teil, beispielsweise als Kunststoff-Spritzgussteil, ausgebildet sein. Ein solches Ventil 19 ermöglicht, dass die Einströmöffnungen 22 und/oder Ausströmöffnungen 23 radial versetzt zueinander ausgerichtet sein können. In Figur 7 ist beispielsweise eine schematische Ansicht dargestellt, aus welcher beispielhaft hervorgeht, dass die Durchgänge 24 um einen Winkel von beispielsweise 30° zueinander versetzt sind.

Durch ein solches Ventil 19 kann beispielsweise ein Zweiwegeventil geschaffen sein.

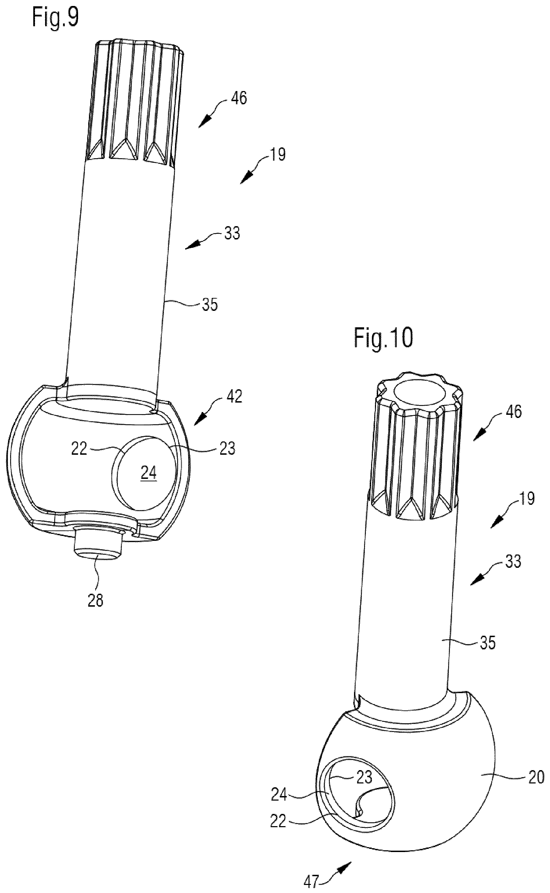

In Figur 9 ist eine erste perspektivische Ansicht und in Figur 10 eine zweite perspektivische Ansicht einer alternativen Ausgestaltung des Ventils 19 zu Figur 6 dargestellt. Bei dieser Ausführungsform ist vorgesehen, dass die kugelförmige Steuerfläche 20 als Schalensegment 47 oder an einem Schalensegment 47 ausgebildet ist. In dem Schalensegment 47 ist eine Einströmöffnung 22 vorgesehen. Der Durchgang 24 kann durch die Wandstärke des Schalensegments 47 ausgebildet sein. Die Ausströmöffnung 23 liegt der Einströmöffnung 22 gegenüber, beispielsweise auf der Innenseite des Schalensegments 47. Benachbart zur Einströmöffnung 22 umfasst das Schalensegment 47 die kugelförmige Steuerfläche 20. Dadurch ist ermöglicht, dass bei einer Drehbewegung des Ventils 19 die Einlassöffnung 14 im Gehäuse 12 vollständig geschlossen werden kann.

Auch dieses Ventil 19 gemäß den Figuren 9 und 10 kann einteilig als Spritzgussteil oder Verbundbauteil ausgebildet sein.

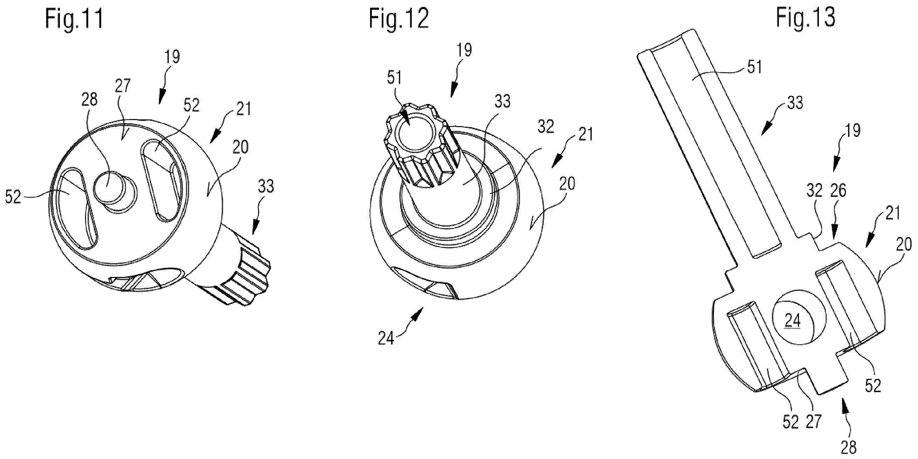

In Figur 11 ist eine schematische Ansicht von unten auf eine alternative Ausführungsform des Ventils 19 dargestellt. Die Figur 12 zeigt eine perspektivische Ansicht von oben auf das Ventil 19 gemäß Figur 11. In Figur 13 ist eine schematische Schnittansicht des Ventils 19 gemäß den Figuren 11 und 12 dargestellt.

Dieses Ventil 19 ist einstückig ausgebildet. Beispielsweise kann dieses Ventil 19 als Kunststoffspritzgussteil ausgebildet sein. Die Welle 33 kann eine Aussparung 51 aufweisen. Diese Aussparung 51 kann sich vom stirnseitigen Ende aus erstrecken, beispielsweise bis zur Gleithülse 32 oder bis in die Kugel 21 hinein.

In der Kugel 21 ist zumindest eine Aussparung 52 vorgesehen. Im Ausführungsbeispiel sind zwei Aussparungen 52 beispielhaft dargestellt. Diese Aussparungen 52 erstrecken sich von dem unteren Anschlussabschnitt 27 in Richtung auf den oberen Anschlussabschnitt 26. Diese zumindest eine Aussparung 52 ist von der Steuerfläche 20 umgeben. Zudem kann sich diese Aussparung 52 zwischen der Steuerfläche 20 und dem Durchgang 24 erstrecken.

Die Kombination der Aussparungen 51 und 52 kann wahlweise vorgesehen sein. Diese Aussparungen 51, 52 dienen zur Vermeidung einer Materialanhäufung. Dadurch können Einfallstellen vermieden und eine hohe Maßhaltigkeit erzielt werden. Zudem kann beispielsweise durch die Aussparung 51 eine Hohlwelle ausgebildet sein, welche eine hohe Steifigkeit und auch ein hohes Torsionsmoment aufweist. Insbesondere kann dadurch auch eine Gewichtsreduzierung des Ventils 19 erzielt werden.

## Patentansprüche

1. Kugelventil, insbesondere für einen Einsatz in einem Kältemittelkreislauf einer Kälteanlage,
- mit einem Gehäuse (12), welches zumindest eine Einlassöffnung (14) und zumindest eine Auslassöffnung (16) umfasst, zwischen denen ein Regulierraum (17) vorgesehen ist,
- mit einem in dem Regulierraum (17) angeordneten Ventil (19), welches zumindest eine kugelförmige Steuerfläche (20) mit zumindest einem Durchgang (24) umfasst, der eine Einströmöffnung (22) mit einer Ausströmöffnung (23) des Ventils (19) verbindet,
- mit einer Anschlussöffnung (18) in dem Gehäuse (12), die in den Regulierraum (17) mündet, in welche ein Anschlussgehäuse (34) einsetzbar ist, wobei zwischen dem Anschlussgehäuse (34) und der Anschlussöffnung (18) zumindest eine Dichtung (43) vorgesehen ist und das Anschlussgehäuse (34) eine Wellendurchführung (36) mit einer darin gelagerten Welle (33) umfasst, durch welche das Ventil (19) ansteuerbar ist, wobei
- das Ventil (19) mit der zumindest einen kugelförmigen Steuerfläche (20) durch die Anschlussöffnung (18) des Gehäuses (12) hindurch in den Regulierraum (17) einsetzbar und zwischen der Einlassöffnung (14) und der Auslassöffnung (16) positionierbar ist, und
- die kugelförmige Steuerfläche (20) einen unteren Anschlussabschnitt (27) aufweist, an dem ein Drehlager (28) vorgesehen ist, welches beim Positionieren des Ventils (19) in den Regulierraum (17) in einer Lagerstelle (29) des Gehäuses (12) positionierbar ist,
**dadurch gekennzeichnet,**
- **dass** die kugelförmige Steuerfläche (20), die Welle (33) und das Drehlager (28) einstückig miteinander ausgebildet sind.

2. Kugelventil nach Anspruch 1, **dadurch gekennzeichnet, dass** das Gehäuse (12) einteilig ausgebildet ist und in dem Gehäuse (12) die Einlassöffnung (14) und die zumindest eine Auslassöffnung (16) sowie der dazwischen angeordnete Regulierraum (17) sowie die Anschlussöffnung (23) vorgesehen ist, welche sich zwischen dem Regulierraum (17) und einer Außenseite des Gehäuses (12) erstreckt.

3. Kugelventil nach Anspruch 1 oder 2, **dadurch gekennzeichnet, dass** nur einseitig in die Einlassöffnung (14) ein Verschluss (39) einsetzbar ist, der eine an der kugelförmigen Steuerfläche (20) angreifende Dichtung (41) aufweist, oder dass beidseitig zum Regulierraum (17) in die Einlassöffnung (14) und die Auslassöffnung (16) jeweils ein Verschluss (39) einsetzbar ist, der eine an der kugelförmigen Steuerfläche (20) angreifende Dichtung (41) umfasst.

4. Kugelventil nach einem der vorhergehenden Ansprüche, **dadurch gekennzeichnet, dass** das Drehlager (28) als ein Lagerzapfen oder als Ringbund ausgebildet und das Drehlager (28) in eine Lagerstelle (29) im Gehäuse (12) eingreift oder in eine Lagerbuchse (31), welche in der Lagerstelle (29) des Gehäuses (12) vorgesehen ist.

5. Kugelventil nach einem der vorhergehenden Ansprüche, **dadurch gekennzeichnet, dass** die Welle (33) in dem Anschlussgehäuse (34) mit zumindest einer Gleithülse (32) gelagert ist.

6. Kugelventil nach einem der vorhergehenden Ansprüche, **dadurch gekennzeichnet, dass** die kugelförmige Steuerfläche (20) dem unteren Anschlussabschnitt (27) gegenüberliegend einen oberen Anschlussabschnitt (26) aufweist, wobei an dem unteren Anschlussabschnitt (27) das Drehlager (28) und gegenüberliegend an dem oberen Anschlussabschnitt (26) die Welle (33) vorgesehen ist.

7. Kugelventil nach Anspruch 6, **dadurch gekennzeichnet, dass** zwischen der Welle (33) und dem oberen Anschlussabschnitt (26) eine verdrehgesicherte Steckverbindung (38) vorgesehen ist, oder dass die Welle (33) einteilig mit dem oberen Anschlussabschnitt (26) ausgebildet ist.

8. Kugelventil nach einem der Ansprüche 1 bis 6, **dadurch gekennzeichnet, dass** die zumindest eine kugelförmige Steuerfläche (20), die Welle (33), das Drehlager (28) und die Gleithülse (32) einstückig miteinander ausgebildet sind.

9. Kugelventil nach Anspruch 1 oder 8, **dadurch gekennzeichnet, dass** die zumindest eine kugelförmige Steuerfläche (20) und/oder die Welle (33), und vorzugsweise das Drehlager (28), und vorzugsweise die Gleithülse (32) als ein Kunststoff-Spritzgussteil oder ein Verbundbauteil oder ein Zweikomponentenbauteil ausgebildet ist.

10. Kugelventil nach Anspruch 1, 8 oder 9, **dadurch gekennzeichnet, dass** zumindest ein Wellenabschnitt (35) der Welle (33) und die kugelförmige Steuerfläche (20) gratfrei ausgebildet sind.

11. Kugelventil nach einem der vorhergehenden Ansprüche, **dadurch gekennzeichnet, dass** die kugelförmige Steuerfläche (20) an einer Kugel (21) ausgebildet ist, bei welcher der zumindest eine Durchgang (24) zwischen der Einströmöffnung (22) und der Ausströmöffnung (23) als ein Durchgangskanal ausgebildet ist, wobei die Ausströmöffnung (23) der Einströmöffnung (22) gegenüberliegt oder in einem Winkel von kleiner 180° ausgerichtet ist.

12. Kugelventil nach Anspruch 11, **dadurch gekennzeichnet, dass** an der Kugel (21) und/oder der Welle (33) zumindest eine Aussparung (51, 52) zur Reduzierung einer Materialanhäufung vorgesehen ist, oder dass die Kugel (21) und die Welle (33) aus einem Vollmaterial hergestellt sind.

13. Kugelventil nach einem der vorhergehenden Ansprüche, **dadurch gekennzeichnet, dass** die kugelförmige Steuerfläche (20) an einem Schalensegment (47) oder als Schalenelement (47) ausgebildet ist, welches sich nur teilweise in radialer Richtung erstreckt und vorzugsweise der Durchgang (24) durch die Wandstärke des Schalensegmentes (47) gebildet ist.

14. Kugelventil nach einem der vorhergehenden Ansprüche, **dadurch gekennzeichnet, dass** zumindest zwei kugelförmige Steuerflächen in der Längsachse der Welle (33) aneinandergereiht ausgerichtet sind und gemeinsam durch die Welle (33) ansteuerbar sind.

15. Kugelventil nach einem der vorhergehenden Ansprüche, **dadurch gekennzeichnet, dass** das Kugelventil als ein Schaltventil, ein Dosierventil, ein Mehrwegventil oder ein Expansionsventil ausgebildet ist.

## Claims

1. Ball valve, in particular for use in a refrigerant circuit of a refrigeration system,
- comprising a housing (12) that includes at least one inlet opening (14) and at least one outlet opening (16), between which a control chamber (17) is provided,
- with a valve (19) arranged in the control chamber (17), which comprises at least one spherical control surface (20) with at least one passage (24) connecting an inlet opening (22) to an outlet opening (23) of the valve (19),
- with a connection opening (18) in the housing (12) that opens into the control chamber (17), into which a connection housing (34) can be inserted, wherein at least one seal (43) is provided between the connection housing (34) and the connection opening (18), and the connection housing (34) comprises a shaft passage (36) with a shaft (33) mounted therein, through which the valve (19) can be actuated, wherein
- the valve (19), with its at least one spherical control surface (20), can be inserted through the connection opening (18) of the housing (12) into the regulating chamber (17) and positioned between the inlet opening (14) and the outlet opening (16), and
- the spherical control surface (20) has a lower connection section (27) on which a pivot bearing (28) is provided, which, when the valve (19) is positioned in the regulating chamber (17), can be positioned in a bearing seat (29) of the housing (12),
**characterized in,**
- **that** the spherical control surface (20), the shaft (33), and the pivot bearing (28) are formed integrally with one another.

2. Ball valve according to claim 1, **characterized in that** the housing (12) is formed as a single piece and the housing (12) includes the inlet opening (14) and the at least one outlet opening (16), as well as the regulating chamber (17) arranged therebetween and the connection opening (23), which extends between the regulating chamber (17) and an outer surface of the housing (12), are provided.

3. Ball valve according to claim 1 or 2, **characterized in that** a closure (39) can be inserted into the inlet opening (14) on only one side, which closure has a seal (41) engaging the spherical control surface (20), or that a closure (39) can be inserted into the inlet opening (14) and the outlet opening (16) on both sides, each comprising a closure (39) that includes a seal (41) engaging the spherical control surface (20).

4. Ball valve according to any of the preceding claims, **characterized in that** the pivot bearing (28) is designed as a bearing journal or as a ring collar, and the pivot bearing (28) engages in a bearing seat (29) in the housing (12) or in a bearing bushing (31) provided in the bearing seat (29) of the housing (12).

5. Ball valve according to one of the preceding claims, **characterized in that** the shaft (33) is mounted in the connection housing (34) with at least one sliding sleeve (32).

6. Ball valve according to any one of the preceding claims, **characterized in that** the spherical control surface (20) has an upper connection section (26) opposite the lower connection section (27), wherein the rotary bearing (28) is provided on the lower connection section (27) and the shaft (33) is provided on the opposite upper connection section (26).

7. Ball valve according to claim 6, **characterized in that** a rotation-locked plug-in connection (38) is provided between the shaft (33) and the upper connection section (26), or **in that** the shaft (33) is formed integrally with the upper connection section (26).

8. Ball valve according to any one of claims 1 through 6, **characterized in that** the at least one spherical control surface (20), the shaft (33), the rotary bearing (28), and the sliding sleeve (32) are formed as a single unit.

9. Ball valve according to claim 1 or 8, **characterized in that** the at least one spherical control surface (20) and/or the shaft (33), and preferably the pivot bearing (28), and preferably the sliding sleeve (32) are formed as a plastic injection-molded part, a composite component, or a two-component component.

10. Ball valve according to claim 1, 8, or 9, **characterized in that** at least one shaft section (35) of the shaft (33) and the spherical control surface (20) are free of burrs.

11. Ball valve according to any one of the preceding claims, **characterized in that** the spherical control surface (20) is formed on a sphere (21), in which the at least one passage (24) between the inlet opening (22) and the outlet opening (23) is formed as a through channel, wherein the outlet opening (23) is opposite the inlet opening (22) or is oriented at an angle of less than 180°.

12. Ball valve according to claim 11, **characterized in that** at least one recess (51, 52) is provided on the ball (21) and/or the shaft (33) to reduce material buildup, or **in that** the ball (21) and the shaft (33) are made of a solid material.

13. Ball valve according to any one of the preceding claims, **characterized in that** the spherical control surface (20) is formed on a shell segment (47) or as a shell element (47), which extends only partially in the radial direction, and preferably the passage (24) is formed through the wall thickness of the shell segment (47).

14. Ball valve according to any one of the preceding claims, **characterized in that** at least two spherical control surfaces are aligned in a row along the longitudinal axis of the shaft (33) and can be actuated jointly by the shaft (33).

15. Ball valve according to any one of the preceding claims, **characterized in that** the ball valve is configured as a switching valve, a metering valve, a multi-way valve, or an expansion valve.

## Revendications

1. Robinet à tournant sphérique, en particulier destinée à être utilisée dans un circuit de réfrigérant d'une installation frigorifique,
- comprenant un corps (12) qui comporte au moins un orifice d'entrée (14) et au moins un orifice de sortie (16), entre lesquels est prévue une chambre de régulation (17),
- comportant une soupape (19) disposée dans la chambre de régulation (17), laquelle comprend au moins une surface de commande sphérique (20) avec au moins un passage (24) reliant une ouverture d'entrée (22) à une ouverture de sortie (23) de la soupape (19),
- avec un orifice de raccordement (18) dans le boîtier (12), qui débouche dans la chambre de régulation (17), dans lequel un boîtier de raccordement (34) peut être inséré, au moins un joint d'étanchéité (43) étant prévu entre le boîtier de raccordement (34) et l'orifice de raccordement (18) et le boîtier de raccordement (34) comprenant un passage d'arbre (36) dans lequel est monté un arbre (33), par l'intermédiaire duquel la soupape (19) peut être actionnée,
- la soupape (19), dotée d'au moins une surface de commande sphérique (20), peut être insérée dans la chambre de régulation (17) à travers l'orifice de raccordement (18) du boîtier (12) et positionnée entre l'orifice d'entrée (14) et l'orifice de sortie (16), et
- la surface de commande sphérique (20) présente une partie de raccordement inférieure (27) sur laquelle est prévu un palier de rotation (28) qui, lors du positionnement de la soupape (19) dans la chambre de régulation (17), peut être positionné dans un logement (29) du boîtier (12), **caractérisée en ce que**,
- **en ce que** la surface de commande sphérique (20), l'arbre (33) et le palier de rotation (28) sont formés d'un seul tenant.

2. Robinet à tournant sphérique selon la revendication 1, **caractérisée en ce que** le boîtier (12) est réalisé d'un seul tenant et **en ce que**, dans le boîtier (12), sont prévus l'orifice d'entrée (14) et au moins un orifice de sortie (16), ainsi que la chambre de régulation (17) disposée entre celles-ci et l'orifice de raccordement (23), qui s'étend entre la chambre de régulation (17) et une face extérieure du boîtier (12), sont prévus.

3. Robinet à tournant sphérique selon la revendication 1 ou 2, **caractérisée en ce qu'**un obturateur (39), comportant un joint d'étanchéité (41) venant en contact avec la surface de commande sphérique (20), peut être inséré d'un seul côté dans l'orifice d'entrée (14), ou **en ce que**, des deux côtés de la chambre de régulation (17), dans l'orifice d'entrée (14) et dans l'orifice de sortie (16) peut être inséré de chaque côté un obturateur (39) comprenant un joint d'étanchéité (41) venant en appui contre la surface de commande sphérique (20).

4. Robinet à tournant sphérique selon l'une des revendications précédentes, **caractérisée en ce que** le palier de rotation (28) est réalisé sous la forme d'un tourillon ou d'une collerette annulaire et s'engage dans un logement de palier (29) du boîtier (12) ou dans une douille de palier (31) prévue dans le logement de palier (29) du boîtier (12).

5. Robinet à tournant sphérique selon l'une des revendications précédentes, **caractérisée en ce que** l'arbre (33) est monté dans le boîtier de raccordement (34) à l'aide d'au moins une douille coulissante (32).

6. Robinet à tournant sphérique selon l'une des revendications précédentes, **caractérisée en ce que** la surface de commande sphérique (20) présente, à l'opposé de la partie de raccordement inférieure (27), une partie de raccordement supérieure (26) , le palier de rotation (28) étant prévu sur la partie de raccordement inférieure (27) et l'arbre (33) étant prévu à l'opposé, sur la partie de raccordement supérieure (26).

7. Robinet à tournant sphérique selon la revendication 6, **caractérisée en ce qu'**un raccord enfichable antirotation (38) est prévu entre l'arbre (33) et la partie de raccordement supérieure (26), ou **en ce que** l'arbre (33) est réalisé d'un seul tenant avec la partie de raccordement supérieure (26).

8. Robinet à tournant sphérique selon l'une des revendications 1 à 6, **caractérisée en ce que** la au moins une surface de commande sphérique (20), l'arbre (33), le palier de rotation (28) et la douille coulissante (32) sont formés d'un seul tenant.

9. Robinet à tournant sphérique selon la revendication 1 ou 8, **caractérisée en ce que** la au moins une surface de commande sphérique (20) et/ou l'arbre (33), et de préférence le palier de rotation (28), et de préférence la douille coulissante (32), sont réalisés sous la forme d'une pièce moulée par injection en matière plastique, d'un composant composite ou d'un composant à deux composants.

10. Soupape à bille selon la revendication 1, 8 ou 9, **caractérisée en ce qu'**au moins une partie (35) de l'arbre (33) et la surface de commande sphérique (20) sont exemptes de bavures.

11. Robinet à tournant sphérique selon l'une des revendications précédentes, **caractérisée en ce que** la surface de commande sphérique (20) est formée sur une bille (21), dans laquelle le au moins un passage (24) entre l'orifice d'entrée (22) et l'orifice de sortie (23) est réalisé sous la forme d'un canal de passage, l'orifice de sortie (23) étant situé en face de l'orifice d'entrée (22) ou orienté selon un angle inférieur à 180°.

12. Robinet à tournant sphérique selon la revendication 11, **caractérisée en ce qu'**au moins un évidement (51, 52) destiné à réduire l'accumulation de matière est prévu sur la bille (21) et/ou l' e arbre (33), ou en ce que la bille (21) et l'arbre (33) sont fabriqués dans un matériau massif.

13. Robinet à tournant sphérique selon l'une des revendications précédentes, **caractérisée en ce que** la surface de commande sphérique (20) est formée sur un segment de coque (47) ou sous la forme d'un élément de coque (47), qui ne s'étend que partiellement dans la direction radiale, et de préférence, le passage (24) est formé par l'épaisseur de paroi du segment de coque (47).

14. Robinet à tournant sphérique selon l'une des revendications précédentes, **caractérisée en ce qu'**au moins deux surfaces de commande sphériques sont alignées l'une à côté de l'autre dans l'axe longitudinal de l'arbre (33) et peuvent être commandées conjointement par l'arbre (33).

15. Robinet à tournant sphérique selon l'une des revendications précédentes, **caractérisée en ce que** la robinet à tournant sphérique est conçue comme une vanne de commutation, une vanne de dosage, une vanne à plusieurs voies ou une vanne d'expansion.
